# EUROPEAN PATENT APPLICATION

(11) **EP 1 650 085 A1**
(43) Date of publication of application: **26.04.2006**
(21) Application number: 04105254.9
(22) Date of filing: 22.10.2004
(51) Int. Cl.: B60R 21/01, B60R 21/00

(54) **Occupant-sensing imaging system**

(71) Applicant: IEE INTERNATIONAL ELECTRONICS & ENGINEERING S.A., 6468 Echternach (LU)
(72) Inventor: Decoster, Yves, 6760, Ethe (BE); Kaiser, Jean-Luc, 9147, Erpeldange (LU); Cauquy, Marie-Astrid, 57970, Yutz (FR); Kiefer, Walter, 66706, Perl-Nennig (DE)
(74) Representative: Beissel, Jean

(57) **Abstract**

A sensing system for an automotive vehicle comprises at least one imager element and at least one illuminating device to be arranged within an automotive vehicle for sensing the presence of an object in a sensing area associated to said vehicle. According to the invention the illuminating device comprises at least one light source for generating a light beam and light beam shaping means for generating an inhomogeneous light distribution in said sensing area, said inhomogeneous light distribution presenting at least one intensity maximum in a specific region of said sensing area.

## Description

The present invention generally relates to an occupant sensing system for an automotive vehicle, which is based on an imager system, and more specifically to an illumination device for an occupant-sensing imager system.

The appropriate control of secondary restraint systems, like e.g. airbags and the like, in automotive vehicles requires a reliable sensing of the occupation status of the vehicle seat, to which the secondary restraint system is associated. The secondary restraint system is in fact most effective, if its deployment is adapted to the actual occupation situation of the vehicle seat. Furthermore, a reliable sensing of a position of a possible occupant is very important in order to disable the airbags, if the occupant is out of position, e.g. if the occupant is in a position in which the deployment of the airbag would likely result in severe injuries of the passenger.

One type of occupant sensing systems is based on an optical imager system for determining the presence of an occupant and/or its current sitting position and/or the localisation e.g. of the occupant's head. Such an optical imager system comprises e.g. a CCD or a CMOS camera for monitoring a specific sensing area and an associated control unit for evaluating the images taken by the camera. The control unit uses suitable image processing algorithms for detecting a predetermined pattern indicative e.g. of a passenger presence, and for detecting the position of a specific part as e.g. the passenger head. Based on this position, the control unit may conclude on the sitting position of the passenger and generate a corresponding control signal for the airbag control unit.

As the position of the passenger has to be determined in the three-dimensional space, it is advantageous to use a 3D-camera, which records depth information simultaneously with the recording of a situational image (based e.g. on the time of flight (TOF) principle). Such a camera thus immediately provides the required data enabling a determination of a position in the three-dimensional space.

However a 3D-TOF camera for car-occupant sensing needs a pulsed or modulated illumination with high illumination density on the area to be investigated in order to be able to provide the necessary depth-resolution and accuracy for a large range of coefficients of reflection of the scene and for different ambient lighting conditions. It follows that sensing systems using this type of imager element have to be provided with an appropriate illuminating device. Due to constraints regarding the over-all dimensions of the system, the illumination system has to cover a very large angular aperture, as the area to be covered by the sensing system is usually rather large. It follows that a uniform high illumination density would require a very powerful light source. The use of such a powerful light source however leads to a large power consumption and a problematic heat generation, and is thus not compatible with the requirements in the automotive field.

### Object of the invention

The object of the present invention is to provide an imager-based sensing system with an appropriate illuminating device, which is adapted to the use in an automotive vehicle.

### General description of the invention

In order to overcome the abovementioned problems, the present invention proposes a sensing system for an automotive vehicle, which comprises at least one imager element and at least one illuminating device to be arranged within an automotive vehicle for sensing the presence of an object in a sensing area associated to the vehicle. According to the invention the illuminating device comprises at least one light source for generating a light beam and light beam shaping means for generating an inhomogeneous light distribution in said sensing area, said inhomogeneous light distribution presenting at least one local intensity maximum in a specific region of said sensing area.

Instead of illumination the entire sensing area with a uniform light distribution, the present invention thus proposes to provide an illuminating device with appropriate beam shaping means for generating an inhomogeneous intensity distribution. This means that areas of special interest e.g. for car-occupant sensing are identified and that the illuminating device directs the light preferentially on these areas so that the illumination distribution presents local power maxima in these areas of special interest. The preferential illumination of specific regions of interest within the sensing area reduces the overall power consumption and heat generation without affecting a reliable operation of the sensing device. Furthermore, the preferential illumination of specific areas enables to reduce the size of the illuminating device, which in turn makes integration into the vehicle easier and less expensive.

The at least one light source device may be formed by at least one semi-conductor optoelectronic device such as a light-emitting diode, a laser diode or a vertical cavity surface emitting laser. The preferred wavelength of the at least one light source is in the NIR region, approximately 830 nm. The at least one light source may be placed in a reflecting cavity in order to have a more directional output.

In a preferred embodiment, said beam shaping means comprises a diffractive optical element arranged in front of said at least one light source, said diffractive optical element being configured for splitting light from said at least one light source into different partial beams with predefined intensity ratios and propagating into predefined directions. Depending on the configuration said beam shaping means may further comprise a refractive optical element arranged between said at least one light source and said diffractive optical element. The refractive optical element, e.g. a lens with appropriate focal characteristics, may be provided for shaping the size of the light beam prior to its entry into the diffractive element.

It will be noted that the use of beam shaping optics comprising a diffractive optical element provides an ease of adaptability of the illumination distribution to different car types. Only the diffraction pattern of the diffractive optical element has to be adapted to a specific sensing area of a specific vehicle, while other components as the at least one light source as well as possible other optical components, like e.g. a further refractive element, etc, may remain unchanged.

The beam shaping optics are optimized such that the total illumination generated by the at least one light source corresponds to a predefined illumination distribution in relation to the geometry of the sensing area. This optimization may act on several parameters such as e.g. the focal length of a refractive element, the distance between the light source and the refractive element, the relative position of a possible plurality of light sources, and the diffraction pattern of the diffractive optical elements etc.. This optimization can be done by using algorithms known from digital holography, such as direct binary search. The specific diffractive pattern of the diffractive optical element can be manufactured by known techniques such as e.g. photolithography in a photosensitive material.

In a preferred embodiment of the invention, the illuminating device comprises a plurality of individual light sources arranged in an array configuration. The individual light sources may e.g. comprise semi-conductor optoelectronic devices such as light-emitting diodes, laser diodes or vertical cavity surface emitting lasers. The different light sources are preferably arranged on a common substrate and may be placed in a reflecting cavity in order to provide a more directional output. Depending on the configuration, the light sources may be manufactured on the same substrate that the imager element.

In a possible embodiment, one single optical element may be associated to the plurality of light sources so as to generate the required intensity distribution in the sensing area. In another embodiment, said beam shaping means comprises a plurality of individual optical elements, each individual optical element being associated to one individual light source. In the latter case, the number of optical elements may be equal to the number of light sources, so that each light source has its own optical element associated therewith. In a possible variant however, one common optical element could be associated to a part of said several light sources, while the other individual light sources may have an individual optical element associated therewith.

Said individual optical elements may comprise refractive optical elements arranged in front of the associated light source in such a way, that an optical axis of each refractive optical element is offset with respect to an optical axis of said associated light source. The offset of the optical axis of the refractive element enables the light beam generated by the associated light source to be directed to a specific region of the sensing area. By individually adjusting the offset for each of the different light sources, the required light distribution may be generated only be means of these refractive optical elements. It follows that in this embodiment the beam shaping means does not necessary require a refractive element for generating the desired light distribution in the sensing area.

It will be appreciated, that the imager element and said illuminating device may be configured to be arranged at distant locations in the vehicle. In a preferred embodiment however, the imager element and said illuminating device are configured to be arranged adjacent to each other in the vehicle and preferably in a single housing.

It will be appreciated, that the illuminating device advantageously further comprises means for adjusting the illumination intensity of said at least one light source or the plurality of light sources. Such adjustment of illumination density may e.g. be used for reducing the intensity of one or more of the light sources e.g. if the corresponding portion of the sensing area is detected to be empty. The overall power consumption of the system may thus be reduced while at the same time, the lifetime of the respective light sources may be increased. Moreover, a suitable adjustment of the light intensities of the individual light sources of an array of light sources may be used to further shape the light distribution in the sensing area.

It will be appreciated, that the sensing system of the present invention may be used in different applications in an automotive vehicle. Such a sensing system could for instance be used in an obstacle-sensing system for an automotive vehicle. In this embodiment the imager element and said illuminating device are arranged in said vehicle so that the sensing area covers a part of the surroundings of the vehicle. The system may then be able to detect pedestrians or objects in the sensing area and the corresponding information may be used in a pedestrian protection system, in a pre-crash system or in a parking system. It will be noted that the specific light distribution may be used in this embodiment in order to suitably shape the sensing area. In fact, by reducing the illumination density in uninteresting regions of the vehicle surroundings, these uninteresting regions are eliminated from the sensing area.

In a different application, the sensing system is used in an occupant-sensing system for an automotive vehicle as described above. The imager element and the illuminating device are then arranged within a passenger compartment so that the sensing area covers a part of the vehicle interior compartment.

It will be noted that the specific region of said sensing area, in which the light distribution presents an intensity maximum, may e.g. be located in a furthest part of the sensing area with respect to the imager element and/or the illuminating device. For the occupant sensing application, the most interesting portions of the sensing area are those, in which the passenger's head is located when the passenger is sitting in a correct position or in a complete out-of-position situation. It follows that for this application, the specific region may be located in the vicinity of a headrest position of the vehicle seat and/or in the vicinity of a vehicle dashboard.

### Detailed description with respect to the figures

The present invention will be more apparent from the following description of several not limiting embodiments with reference to the attached drawings, wherein
- Fig.1:: a schematic view of a car interior with an imager system fro the passenger side;
- Fig.2:: a schematic front view of an imager system;

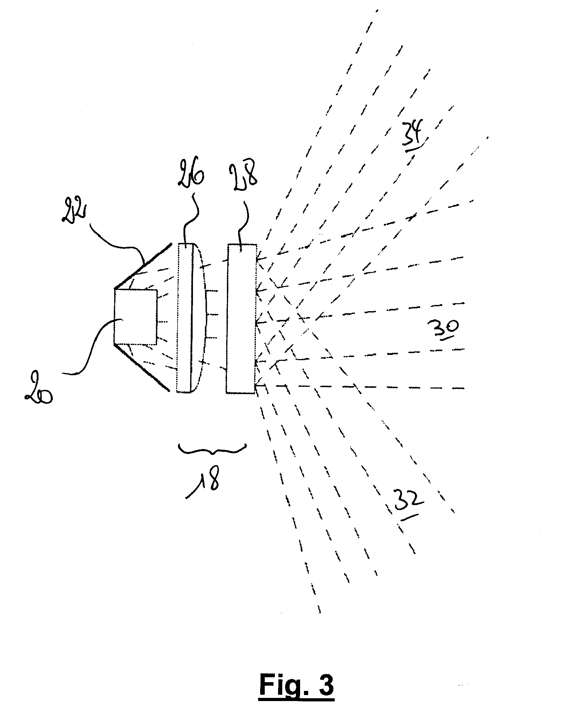

- Fig.3:: a schematic side view of a single light emitting element with beam shaping optics.

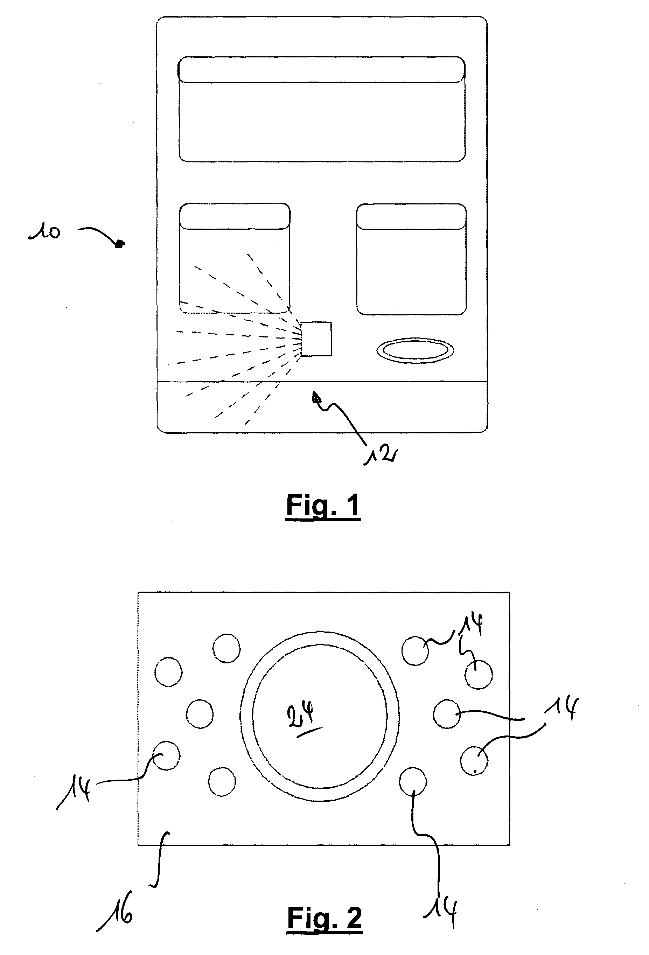

Fig. 1 shows a schematic top view of a car interior 10 equipped with a sensing system 12 for the passenger side. The sensing device 12 comprises e.g. a 3D imaging camera and an illuminating device arranged in a single housing located in the ceiling of the car. The illuminating device is used to provide a time-modulated illumination distribution on a part of the car interior. This illumination is reflected by the interior and a possible occupant, and the reflected light is used as input for a 3D-imaging camera. The 3D-image provided by the camera is used for car-occupant sensing applications.

The illuminating device is formed by an array of several lighting elements 14 formed by a semiconductor optoelectronic light source on a dedicated substrate 16 and an appropriate beam shaping optics 18. The different lighting elements 14 are e.g. arranged in an appropriate array configuration around the optical system 24 of the imager element. The outputs of the lighting elements 14 are individually processed by an optimized combination of refractive and diffractive micro-optics 18 in order to provide the required illumination distribution. The beam shaping optics 18 are optimized such that the total illumination generated from the different light sources 14 corresponds to a predefined illumination distribution in relation to the geometry of the sensing area.

In a preferred embodiment, the light sources are light emitting diodes 20, which are placed inside a cavity 22 with reflecting surfaces of the substrate 16 in order to provide a more directional output. A lens 26 of focal length f is disposed in front of the light emitting diode 20 at a distance d. The lens 20 is provided for shaping the size of the light beam prior to its entry into the diffractive element 28. The light then passes through a diffractive optical element 28, which redirects the light into several partial beams 30, 32, 34 with different intensity ratios and propagating into different directions.

It will be noted, that the use of beam shaping optics 18, which are a combination of refractive 26 and diffractive 28 optics, provides an ease of adaptability of the illumination distribution to different car types. Only the diffraction pattern of the diffractive optical elements 28 has to be adapted, while both the light source 20 as well as the refractive optics 26 do not change.

### List of reference numerals

- 10: car interior
- 12: sensing device
- 14: lighting elements
- 16: substrate
- 18: beam shaping optics
- 20: light emitting diode
- 22: cavity
- 24: optical system of the imager element
- 26: lens
- 28: diffractive element
- 30, 32, 34: partial beams

## Claims

1. Sensing system for an automotive vehicle, comprising at least one imager element and at least one illuminating device to be arranged within an automotive vehicle for sensing the presence of an object in a sensing area associated to said vehicle, said illuminating device comprising at least one light source for generating a light beam, **characterised in that** said at least one illuminating device further comprises light beam shaping means for generating an inhomogeneous light distribution in said sensing area, said inhomogeneous light distribution presenting at least one intensity maximum in a specific region of said sensing area.

2. Sensing system according to claim 1, wherein said beam shaping means comprises a diffractive optical element arranged in front of said at least one light source, said diffractive optical element being configured for splitting light from said at least one light source into different partial beams with predefined intensity ratios and propagating into predefined directions.

3. Sensing system according to claim 2, wherein said beam shaping means further comprises a refractive optical element arranged between said at least one light source and said diffractive optical element.

4. Sensing system according to any one of claims 1 to 3, wherein said illuminating device comprises a plurality of individual light sources arranged in an array configuration.

5. Sensing system according to claim 4, wherein said beam shaping means comprises a plurality of individual optical elements, each individual optical element being associated to one individual light source.

6. Sensing system according to claim 5, wherein said individual optical elements are refractive optical elements arranged in front of the associated light source in such a way, that an optical axis of each refractive optical element is offset with respect to an optical axis of said associated light source.

7. Sensing system according to any one of preceding claims, wherein said specific region is located in a furthest part of the sensing area with respect to the imager element and/or the illuminating device.

8. Sensing system according to any one of preceding claims, wherein said specific region is located in the vicinity of a vehicle dashboard.

9. Sensing system according to any one of preceding claims, wherein said specific region is located in the vicinity of a headrest position of the vehicle seat.

10. Sensing system according to any one of claims 1 to 9, wherein said imager element and said illuminating device are configured to be arranged adjacent to each other in the vehicle.

11. Sensing system according to any one of claims 1 to 9, wherein said imager element and said illuminating device are configured to be arranged in distant locations in the vehicle.

12. Sensing system according to any one of preceding claims, wherein said illuminating device comprises means for adjusting the illumination intensity of said at least one light source.

13. Occupant-sensing system for an automotive vehicle comprising a sensing system according to any one of the preceding claims, wherein said imager element and said illuminating device are arranged within a passenger compartment so that the sensing area covers a part of the vehicle interior compartment.

14. Obstacle-sensing system for an automotive vehicle comprising a sensing system according to any one of the preceding claims, wherein said imager element and said illuminating device are arranged in said vehicle so that the sensing area covers a part of the surroundings of the vehicle.
